Europäisches Patentamt

European Patent Office

Office européen des brevets

(19)

(11) Veröffentlichungsnummer: **0 281 593**
**B1**

# EUROPÄISCHE PATENTSCHRIFT

(12)

(45) Veröffentlichungstag der Patentschrift:
31.01.90

(21) Anmeldenummer: 87905752.9

(22) Anmeldetag: 09.09.87

(86) Internationale Anmeldenummer:
PCT/EP 87/00512

(87) Internationale Veröffentlichungsnummer:
WO 88/02079 (24.03.88 Gazette 88/7)

(51) Int. Cl.⁴: **F 16 H 35/10, F 16 H 27/04**

(54) **GETRIEBE MIT ÜBERLAST-SICHERHEITSKUPPLUNG.**

(30) Priorität: 13.09.86 DE 3631215

(43) Veröffentlichungstag der Anmeldung:
14.09.88 Patentblatt 88/37

(45) Bekanntmachung des Hinweises auf die Patenterteilung:
31.01.90 Patentblatt 90/5

(84) Benannte Vertragsstaaten:
AT BE CH FR GB IT LI NL SE

(56) Entgegenhaltungen:
DE-A- 2 433 995
US-A- 3 817 116

Machine Design, vol. 37, July 1965, "Notched latch
provides torque fuse", page 128

(73) Patentinhaber: ELPATRONIC AG, Baarerstrasse 117,
CH-6300 Zug (CH)

(72) Erfinder: SCHÖN, Stefan, CH-3186 Düdingen (CH)

(74) Vertreter: Hotz, Klaus, Dipl.-El.-Ing. / ETH, c/o
SOUDRONIC AG Industriestrasse 35 Postfach 11,
CH-8962 Bergdietikon (CH)

## Beschreibung

Die Erfindung betrifft ein mechanisches Getriebe, insbesondere über eine Antriebswelle drehantreibbares Schrittgetriebe für die Umwandlung einer Antriebs-Drehbewegung in eine einem vorgegebenen Bewegungsgesetz folgende und an einer Abtriebswelle abnehmbare Abtriebs-Drehbewegung, in welchem eine bei Überlast auslösende federvorgespannte Sicherheitskupplung angeordnet ist, wie es aus der Zeitschrift Machine Design, Band 37, Seite 128 bekannt ist.

Die Absicherung von Drehantrieben durch bei Übersteigen eines vorgegebenen maximalen Drehmoments auslösenden Sicherheitskupplungen ist bekannt. Auch für die Absicherung von Getrieben gegen Beschädigung durch Überlast werden Sicherheitskupplungen eingesetzt, von denen eine Vielzahl von Bauformen entwickelt worden ist. Solche Sicherheitskupplungen können beispielsweise aus zwei durch eine Vorspannfeder in form- oder kraftschlüssigen Eingriff gedrängte Kupplungselemente aufweisen, von denen das eine mit der antreibenden und das andere mit der abgetriebenen Welle des zu sichernden Drehantriebs drehfest gekoppelt ist. Die Höhe des Auslösemoments wird durch die Vorspannung der die Kupplungselemente in Eingriff drängende Vorspannfeder bestimmt, d. h. ist weitgehend konstant. Das Auslösemoment der Sicherheitskupplung wird dementsprechend bei derart gesicherten Getrieben so eingestellt, dass es unterhalb des in bezug auf die Auslegung des Getriebes hinsichtlich der Festigkeit errechneten maximal zulässigen Drehmoments liegt. Auf diese Weise wird sichergestellt, dass das Getriebe niemals überlastet werden kann. Dabei wird dann aber nicht berücksichtigt, dass insbesondere bei Schrittgetrieben mit nachgeschalteten komplexen kinematischen Antrieben nicht die maximale Belastbarkeit des Getriebes selbst, sondern die Beanspruchung in den Bauteilen der nachgeschalteten Kinematik kritisch sein kann, wobei sich die zulässige Beanspruchbarkeit hierbei in Abhängigkeit von der Lage der angeschlossenen kinematischen Glieder auch ändert. In solchen Anwendungsfällen muss das Auslösemoment der Sicherheitskupplung auf das niedrigste, im Abtriebssystem zulässige Drehmoment eingestellt werden, obwohl das in dieser Weise bestimmte niedrige Auslösemoment nur in ganz bestimmten Betriebszuständen erforderlich ist. Bei bestimmten Einsatzfällen wäre es auch zweckmässig, wenn das Auslösemoment in Abhängigkeit vom Abtriebs-Drehmoment veränderbar wäre.

Der Erfindung liegt die Aufgabe zugrunde, ein Getriebe, und zwar insbesondere ein Schrittgetriebe mit einer Sicherheitskupplung zu schaffen, deren Auslösemoment sich vorgegebenen betrieblichen Anforderungen selbsttätig anpasst.

Ausgehend von einem Getriebe der eingangs erwähnten Art wird diese Aufgabe erfindungsgemäss dadurch gelöst, dass die die Sicherheitskupplung vorspannende Feder an einem um einen vorgegebenen Hub in Richtung einer Erhöhung bzw. Verringerung der Federvorspannung beweglich im Getriebegehäuse gehalterten Vorspannelement abgestützt ist, und dass das Vorspannelement Teil des Abtriebes eines Kurven- oder Nockentriebes ist, dessen Antriebskurve oder -nocken drehfest mit der Antriebs- oder der Abtriebswelle gekoppelt ist. Durch Veränderung des Verlaufes der Steuerkurve ist also die Vorspannung der die Sicherheitskupplung vorspannenden Feder und somit das Auslösemoment der Kupplung in Abhängigkeit von der Drehstellung des die Antriebskurve oder den -nocken tragenden Drehteils, d. h. der Antriebs- oder der Abtriebswelle, veränderbar.

Wenn das abzusichernde Getriebe ein Schrittgetriebe mit einer im Getriebegehäuse angeordneten Globoid- oder Zylinder-Walze ist, auf bzw. in deren Umfangsfläche eine steg- oder nutförmige Antriebs-Steuerkurve vorgesehen ist, mit welcher in gleichmässiger Teilung radial von der Umfangsfläche einer Abtriebsscheibe vortretende Abtriebs-Steuerbolzen kämmen, wobei die Abtriebsscheibe auf der rechtwinklig zu und mit Abstand von der Antriebsachse im Getriebegehäuse gelagerten Abtriebswelle angeordnet ist, ist die Ausgestaltung vorzugsweise so getroffen, dass die zwischen der Abtriebsscheibe und der Abtriebswelle angeordnete Sicherheitskupplung zwei relativ zueinander verschiebliche und je nach Verschiebungsstellung in formschlüssigem Eingriff stehende oder voneinander gelöste Kupplungselemente aufweist, von denen das eine drehfest mit der ihrerseits drehbar auf der Abtriebswelle gelagerten Abtriebsscheibe und das andere drehfest mit der Abtriebswelle gekoppelt ist, dass das eine Ende der Vorspannfeder derart direkt oder indirekt an dem relativ zum anderen Kupplungselement verschieblichen Kupplungselement abgestützt ist, dass die Kupplungselemente in Eingriff gedrängt sind, und dass das das andere Ende der Feder abstützende Vorspannelement an einem Ende eines verschwenkbar im Getriebegehäuse gelagerten Schwinghebels angeschlossen ist, der mit einem die Steuerfläche der Antriebskurve bzw. des -nockens des Kurven- bzw. Nockentriebes abtastenden Folgeglied gekoppelt ist.

Zweckmässig ist dabei eine Ausgestaltung, bei der die Antriebsscheibe und das drehfest mit ihr verbundene Kupplungselement zu einem drehbar, in Längsrichtung jedoch unverschieblich auf der Abtriebswelle gelagerten integralen Bauteil vereinigt sind, und das zugeordnete zweite, drehfest mit der Abtriebswelle verbundene Kupplungselement in Längsrichtung verschieblich auf der Abtriebswelle angeordnet ist.

In vorteilhafter Weiterbildung der Erfindung kann die Ausgestaltung dann so getroffen sein, dass der Schwinghebel mit seinem einen Ende um einen im Bereich zwischen der Antriebs- und der Abtriebsachse parallel zur Antriebsachse verlaufenden Achse verschwenkbar im Getriebegehäuse gelagerter einarmiger Hebel ist, der sich über die an bzw. neben der Globoid- oder Zylinder-Walze vorgesehene und drehfest mit ihr verbundene Antriebskurve oder den -nocken des Kurven- oder Nockentriebs hinweg erstreckt und in einem der Antriebskurve bzw. dem -nocken gegenüberliegenden Bereich mit dem Folgeglied versehen ist, wobei in sein freies Ende die Vorspannung der Feder in dem Sinne eingeleitet ist, dass das Folgeglied in Anlage an die Antriebskurve bzw. den -nocken gedrängt wird, und dass auf der den Schwinghebel im Getriebegehäuse lagernden Achse ein zweiter zweiarmiger Hebel verschwenkbar gelagert ist, dessen einer Hebelarm auf der freien Stirnfläche des drehfest aber längsverschieblich auf der Abtriebswelle gelagerter Kupplungselements abgestützt ist, während in sein anderes Ende die Vorspannung der Feder in dem Sinne eingeleitet ist, dass das auf der Stirnfläche des Kupplungselements abgestützte Hebelarmende das Kupplungselement in Eingriff mit dem zugeordneten zweiten Kupplungselement drängt.

Alternativ zu der vorstehenden Ausgestaltung von Schrittgetrieben mit Globoid- oder Zylinder-Walze kann deren Ausgestaltung auch so getroffen werden, dass die zwischen der Globoid- oder Zylinder-Walze und der Antriebswelle angeordnete Sicherheitskupplung zwei relativ zueinander verschiebliche und je nach Verschiebungsstellung in formschlüssigem Eingriff stehende oder voneinander gelöste Kupplungselemente aufweist, von denen das eine drehfest mit der Antriebswelle und das andere drehfest mit der ihrerseits drehbar auf der Antriebswelle gelagerten Globoid- oder Zylinder-Walze gekoppelt ist, dass das eine Ende der Vorspannfeder derart direkt oder indirekt an dem relativ zum anderen Kupplungselement verschieblichen Kupplungselement abgestützt ist, dass die Kupplungselemente in Eingriff gedrängt sind, und dass das das andere Ende der Feder abstützende Vorspannelement an einem Ende eines verschwenkbar im Getriebegehäuse gelagerten Schwinghebels angeordnet ist, der mit einem die Steuerfläche der Antriebskurve bzw. des Nockens abtastenden Folgeglied gekoppelt ist. Bei diesem Ausführungsbeispiel ist also die Lage der Kupplungselemente und der Antriebskurve bzw. des -nockens hinsichtlich ihrer Zuordnung zur Antriebs- bzw. Abtriebswelle vertauscht.

Dabei können dann die Globoid- oder Zylinder-Walze und das drehfest mit ihr verbundene Kupplungselement zu einem drehbar, in Längsrichtung jedoch unverschieblich auf der Antriebswelle gelagerten integralen Bauteil vereinigt sein, wobei das zugeordnete zweite drehfest mit der Antriebswelle verbundene Kupplungselement dann in Längsrichtung verschieblich auf der Antriebswelle angeordnet ist.

Entsprechend der vertauschten Anordnung der Kupplungselemente und des Kurventriebes bei diesem Getriebe ist die Ausgestaltung des speziellen Ausführungsbeispiels dann so getroffen, dass der Schwinghebel ein mit seinem einen Ende um eine im Bereich zwischen der Antriebs- und der Abtriebsachse parallel zur Antriebsachse verschwenkbar im Getriebegehäuse gelagerter einarmiger Hebel ist, der sich über die an bzw. neben der Abtriebsscheibe vorgesehene und drehfest mit ihr verbundene Antriebskurve oder den -nocken des Kurven- oder Nockentriebs hinweg erstreckt und in seiner der Antriebskurve bzw. dem -nocken gegenüberliegenden Bereich mit dem die Antriebskurve bzw. den -nocken abtastenden Folgeglied versehen ist, während in sein freies Ende die Vorspannung der Feder in dem Sinne eingeleitet ist, dass das Folgeglied in Anlage an die Antriebskurve bzw. den -nocken gedrängt wird, und dass auf der den Schwinghebel lagernden Achse ein zweiter zweiarmiger Hebel verschwenkbar gelagert ist, dessen einer Hebelarm auf der freien Stirnfläche des drehfest aber längsverschieblich auf der Antriebswelle gelagerten Kupplungselements abgestützt ist, während in sein anderes Ende die Vorspannung der Feder derart eingeleitet ist, dass das auf der Stirnfläche des Kupplungselements abgestützte Hebelarmende das Kupplungselement in Eingriff mit dem zugeordneten zweiten Kupplungselement drängt.

Die Anordnung der Vorspannfeder an den freien Enden des Schwinghebels bzw. des freien Hebelarms des zweiarmigen Hebels erfolgt zweckmässig so, dass am freien Ende des Schwinghebels ein Ende einer längsverschieblich durch eine Bohrung in einem am freien Ende des zugeordneten Hebelarms des zweiarmigen Hebels vorgesehenen Bauteils hindurchgeführte Zugstange schwenkbar angelenkt ist, und dass die Vorspannfeder eine auf dem durch die Bohrung hindurchgeführten Abschnitt der Zugstange unter Vorspannung angeordnete Druckfeder ist.

Zur Voreinstellung der Vorspannung empfiehlt es sich dann, die Druckfeder an ihrem, dem zugeordneten Hebelarm des zweiarmigen Hebels abgewandten Ende an einer auf ein Gewinde am freien Ende der Zustange aufgeschraubten Mutter abzustützen. Durch Veränderung der Einschraubtiefe dieser — zweckmässig durch eine zweite Mutter gekonterten — Mutter ist dann die Vorspannung veränderbar. Im Betrieb wird die voreingestellte Vorspannung dann natürlich zusätzlich durch die von der Steuerkurve des Kurven- bzw. Nockentriebs abgenommene Bewegung des Schwinghebels überlagert.

Die Erfindung ist in der folgenden Beschreibung eines Ausführungsbeispiels in Verbindung mit der Zeichnung näher erläutert, und zwar zeigt:

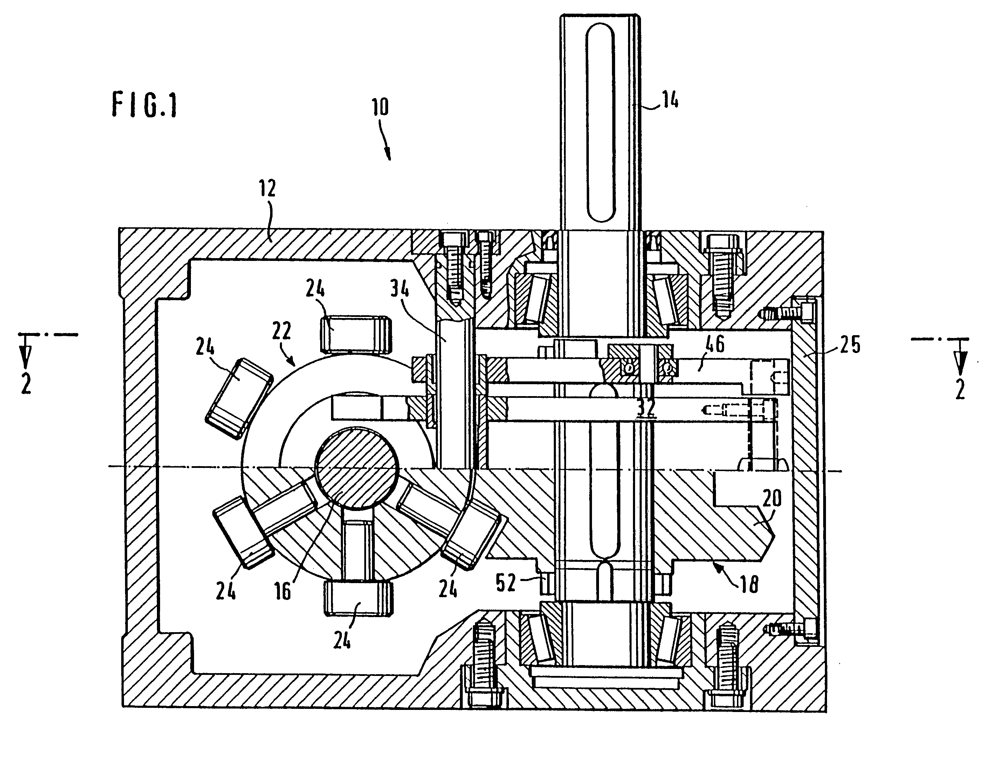

Fig. 1 eine teilweise im Längsmittelschnitt und teilweise in hierzu versetzten Schnittebenen dargestellte Ansicht eines Globoid-Schrittgetriebes mit einer in der erfindungsgemässen Weise bezüglich des Auslösemoments gesteuerten Überlastkupplung;

Fig. 2 eine Schnittansicht, gesehen in Richtung der Pfeile 2-2 in Fig. 1, wobei innerhalb des Getriebegehäuses zusätzlich die Abtriebsscheibe und die Abtriebswelle im Halbschnitt dargestellt sind, und

Fig. 3 eine Ansicht auf das Getriebe, gesehen in Richtung des Pfeils 3 in Fig. 2, wobei der das Getriebegehäuse normalerweise in Blickrichtung verschliessende Gehäusedeckel nicht dargestellt ist.

Das in den Zeichnungsfiguren gezeigte, in seiner Gesamtheit mit 10 bezeichnete Globoid-Schrittgetriebe weist ein Getriebegehäuse 12 auf, in dem eine mit einem Ende aus dem Getriebegehäuse herausgeführte Antriebswelle 14 und mit Abstand von der Antriebswelle rechtwinklig zu ihr versetzt eine ebenfalls mit einem Ende aus dem Getriebegehäuse 12 herausgeführte Abtriebswelle drehbar gelagert sind. Auf der Antriebswelle 14 ist eine Globoid-Walze 18 mit einem von ihrem Umfang vortretenden, im Querschnitt etwa trapezförmigen Steuersteg 20 drehfest angeordnet, und die Abtriebswelle 16 trägt eine Abtriebsscheibe 22, von deren Umfang in gleichmässigen Winkelabständen Steuerbolzen 24 radial vorstehen, von denen die beiden jeweils zur Globoid-Walze 18 weisenden Steuerbolzen 24 an den seitlichen Flanken des Steuersteges 20 anliegen. Bei einer Drehung der Antriebswelle 14 durch einen beispielsweise auf ihrem aus dem Getriebegehäuse 12 vortretenden Ende aufgeflanschten Elektro-Getriebemotor wird die Globoid-Walze 18 also ebenfalls in Drehung versetzt und deren Drehung wird vom Steuersteg 20 auf die jeweils an ihm angreifenden Steuerbolzen 24 übertragen, wobei der Verlauf des Steuersteges 20 der Globoid-Walze 18 das Bewegungsgesetz, d. h. die jeweils gerade erzeugte Drehgeschwindigkeit und Beschleunigung der Abtriebsscheibe 22 und somit der Abtriebswelle 16 bestimmt. Auf diese Weise ist es also möglich, die konstante Eingangsdrehzahl des (nicht gezeigten) Antriebsmotors in eine nicht konstante Abtriebs-Drehbewegung umzuformen, wobei der Verlauf des Steuersteges bei Schrittgetrieben der dargestellten Art häufig so gewählt ist, dass die Abtriebsscheibe 22 von einer Stillstandsperiode aus eine zunächst beschleunigte, dann geschwindigkeitskonstante und hierauf wieder bis zum Stillstand verzögerte Drehbewegung ausführt. Im bisher beschriebenen Umfang entspricht das Globoid-Schrittgetriebe bekannten Getrieben dieser Art, weshalb auf eine nähere Beschreibung der Art und Weise der Lagerung der Antriebs- und der Abtriebswelle im Gehäuse und die spezielle Ausgestaltung der auf der Abtriebsscheibe angeordneten Steuerbolzen als an den Flanken des Steuerstegs der Globoid-Walze abrollenden „Rollenbolzen" verzichtet werden kann. Erwähnt sei lediglich noch, dass das Getriebegehäuse 12 an seiner der Globoid-Walze 18 zugewandten Stirnseite offen ist, wobei die Öffnung allerdings durch einen aufgeschraubten Gehäusedeckel 25 verschlossen ist.

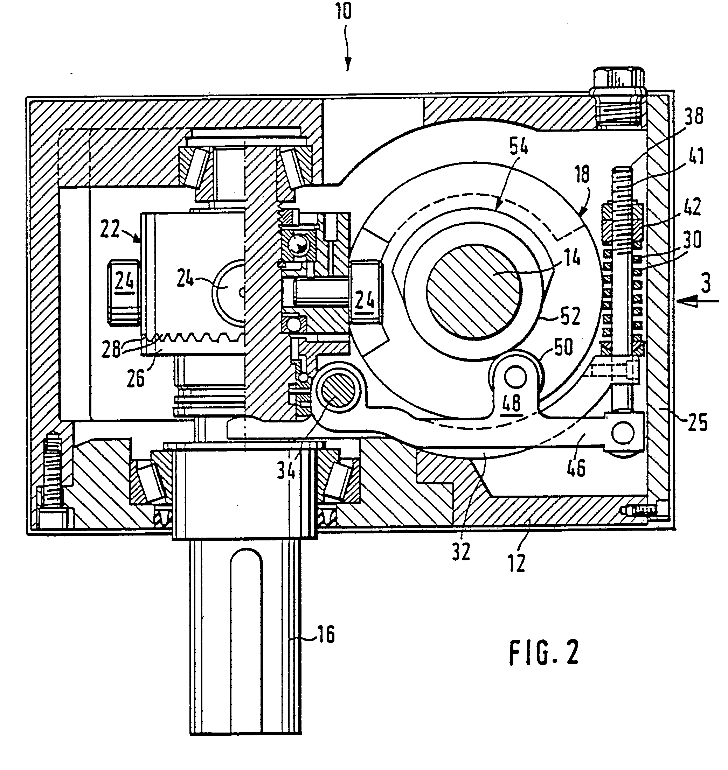

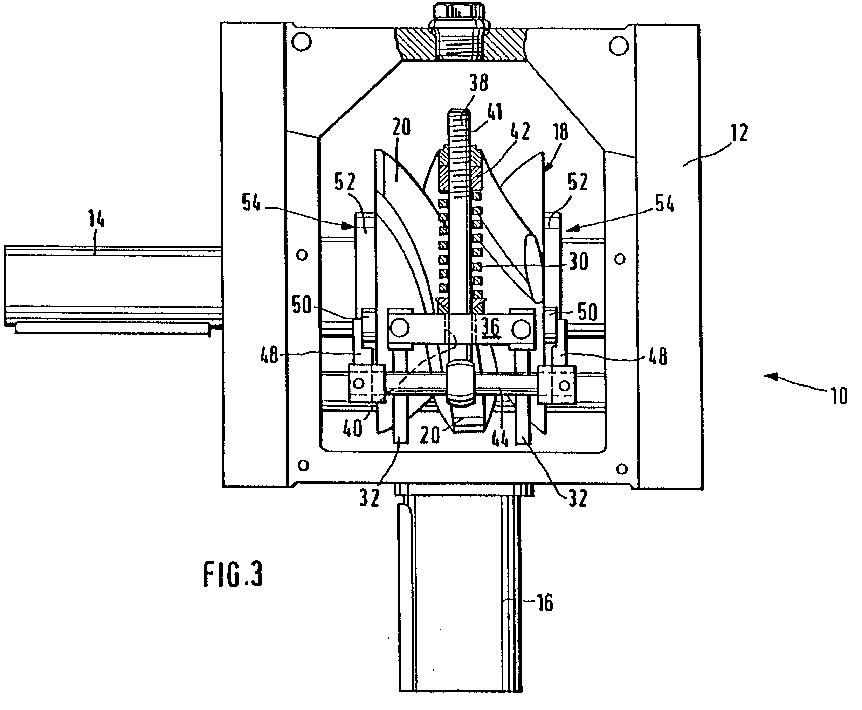

Die Sicherheitskupplung ist im gezeigten Fall auf der Abtriebswelle 16 angeordnet, wobei – wie in Figur 2 erkennbar ist – die drehbar, in Längsrichtung jedoch unverschieblich auf der Abtriebswelle 16 gelagerte Abtriebsscheibe 22 selbst eines der Kupplungselemente der Sicherheitskupplung bildet. Das zweite Kupplungselement 26 wird von einem drehfest, über einen vorgegebenen Hub jedoch längsverschieblich auf der Abtriebswelle gelagerten scheibenförmigen Bauteil mit einem dem Durchmesser der Abtriebsscheibe 22 entsprechenden Durchmesser gebildet. In den einander zugewandten Stirnflächen weisen die Abtriebsscheibe 22 und der scheibenförmige Bauteil eine komplementäre Stirnverzahnung 28 mit radial verlaufenden Zähnen auf, deren Flanken derart geneigt sind, dass bei Übertragung einer Drehkraft von der Abtriebsscheibe 22 auf das vom scheibenförmigen Bauteil gebildete zweite Kupplungselement 26 zwischen der Verzahnung eine in Axialrichtung wirkende Kraftkomponente entsteht, welche das zweite Kupplungselement 26 aus dem Verzahnungseingriff mit der Abtriebsscheibe 22 verschiebt, solange nicht eine entsprechend grössere entgegengesetzte Axialkraft auf das zweite Kupplungselement aufgebracht wird. Diese Gegenkraft wird von einer vorgespannten Feder 30 erzeugt, die insbesondere in den Figuren 2 und 3 erkennbar ist. Diese unter Druckvorspannung stehende Schraubenfeder 30 drückt auf das Ende eines Hebelarms eines zweiarmigen Hebels 32, der auf einer zwischen der Antriebs- und der Abtriebswelle parallel zur Antriebswelle 14 im Getriebegehäuse 12 gehaltenen Achse 34 verschwenkbar gelagert ist und mit dem Ende seines anderen Hebelarms auf der der Stirnverzahnung abgewandten Stirnfläche des Kupplungselements 26 aufliegt. Die unter Druckvorspannung stehende Feder 30 drängt also das vom scheibenförmigen Bauteil gebildete Kupplungselement 26 derart auf die Abtriebsscheibe, dass über die Stirnverzahnung 28 eine formschlüssige Koppelung gegeben ist. Das Auslösen der Sicherheitskupplung erfolgt demzufolge erst dann, wenn bei angetriebenem Getriebe die Summe der an den schrägen Zahnflanken der Stirnverzahnung entstehenden Axialkomponenten der übertragenen Drehkraft grösser als die Vorspannung der Feder 30 wird. Der zweiarmige Hebel 32 ist im Falle des in der Zeichnung dargestellten Ausführungsbeispiels übrigens als zweifacher, beidseitig symmetrisch zur Längsmittelebene des Getriebes angeordneter Doppelhebel ausgebildet, wobei die federseitigen Enden der beiden der Einzelhebel durch ein Querhaupt 36 verbunden sind, auf welchem die Feder 30 abgestützt ist.

Die Feder 30 ist auf einer Zugstange 38 gehalten, welche längsverschieblich durch eine Bohrung 40 im Querhaupt 16 hindurchgeführt und am federseitigen Ende mit einem Gewinde 41 versehen ist, auf welches eine – durch Konterung oder in anderer Weise geeignet gesicherte – Mutter 42 aufgeschraubt ist, welche das dem zweiarmigen Hebel 32 abgewandte Ende der Feder 30 abstützt. Am gegenüberliegenden Ende ist die Zugstange 38 verschwenkbar an einer Querachse 44 angelenkt, die ihrerseits am freien schwingenden Ende eines einarmigen Hebels 46 angeordnet ist, der wiederum von zwei beidseits symmetrisch zur Längsmittelachse des Getriebes vorgesehenen und durch die Querachse 44 verbundenen Einzelhebeln gebildet wird. Die Lagerung des Hebels 46 erfolgt auf der auch den zweiarmigen Hebel 32 lagernden Achse 23. Die Einzelhebel des durch die Querachse 44 verbundenen Hebels 46 sind jeweils unmittelbar seitlich neben den Stirnflächen der Globoid-Walze 18 vorbeigeführt und sie weisen in einem mittleren Bereich jeweils einen in Richtung zur Antriebsachse vorstehenden Ansatz 48, an dessen freiem Ende jeweils eine Rolle 50 drehbar gelagert ist, die jeweils auf der Steuerfläche 52 einer an der jeweils zugeordneten Stirnfläche der Globoid-Walze 18 ausgebildeten Antriebskurve 54 abrollen. Der Ansatz 48 und die Rolle 50 bilden also das Folgeglied eines Kurven- oder Nockentriebes, der bei laufendem Getriebe und somit umlaufender Antriebskurve 54 eine schwingende Bewegung des Hebels 46 zur Folge hat. Es ist ersichtlich, dass sich mit dieser Bewegung des Schwinghebels 46 auch die Vorspannung in der Feder 30 ändert, was eine dementsprechende Änderung der auf das vom scheibenförmigen Bauteil gebildete zweite Kupplungselement 26 ausgeübten Kraft zur Folge hat. Dementsprechend ändert sich auch das Auslösemoment der Sicherheitskupplung entsprechend dem Verlauf der Steuerfläche 52 der Antriebskurve 54. Durch geeignete Ausbildung des Verlaufs der Steuerfläche 52 können also gewünschte Auslösecharakteristiken für die Sicherheitskupplung vorgegeben werden.

Es ist ersichtlich, dass im Rahmen des Erfindungsgedankens Abwandlungen und Weiterbildungen des vorstehend beschriebenen Ausführungsbeispiels verwirklichbar sind. So ist beispielsweise denkbar, dass die beim beschriebenen Getriebe auf der Abtriebswelle angeordnete Sicherheitskupplung auf der Antriebswelle vorgesehen wird, wobei sich dann die Lage des Schwinghebels 46 und des zweiarmigen Hebels 32 im Getriebegehäuse in dem Sinne verändert, dass die Steuerung der Vorspannung der Feder 30 dann durch eine an der Abtriebsscheibe vorgesehene Antriebskurve erfolgt. Des weiteren ist festzuhalten, dass die beschriebene Ausgestaltung und Anordnung der Sicherheitskupplung nicht auf Globoid-Schrittgetriebe beschränkt ist, sondern dass es auch bei anderen mechanischen Getrieben — beispielsweise bei Schrittgetrieben mit einer Zylinder-Walze anstelle einer Globoid-Walze oder auch bei Schneckengetrieben — angewandt werden kann. Anstelle der beschriebenen speziellen Sicherheitskupplung mit durch eine Stirnverzahnung formschlüssig koppelbaren Kupplungselementen können auch Sicherheitskupplungen anderer Bauart in entsprechender Anpassung verwendet werden, sofern ihre Auslösekraft bzw. ihr Auslösemoment von der Vorspannung einer Feder abhängt, die in der beschriebenen Weise durch einen Kurven- oder Nockentrieb veränderbar ist.

## Patentansprüche

1. Mechanisches Getriebe, insbesondere über eine Antriebswelle (14) drehantreibbares Schrittgetriebe für die Umwandlung einer Antriebs-Drehbewegung in eine einem vorgegebenen Bewegungsgesetz folgende und an einer Abtriebswelle (16) abnehmbare Abtriebs-Drehbewegung, in welchem eine bei Überlast auslösende federvorgespannte Sicherheitskupplung (22, 26, 30, 32, 46) angeordnet ist, dadurch gekennzeichnet, dass die die Sicherheitskupplung vorspannende Feder (30) an einem um einen vorgegebenen Hub in Richtung einer Erhöhung bzw. Verringerung der Federvorspannung beweglich im Getriebegehäuse (12) gehalterten Vorspannelement abgestützt ist, und dass das Vorspannelement Teil des Antriebes eines Kurven- oder Nockentriebes ist, dessen Antriebskurve oder -nocken drehfest mit der Antriebs- oder der Abtriebswelle (14 bzw. 16) gekoppelt ist.

2. Schrittgetriebe nach Anspruch 1 mit einer im Getriebegehäuse angeordneten Globoid- oder Zylinder-Walze (18), auf bzw. in deren Umfangsfläche eine steg- oder nutförmige Antriebs-Steuerkurve (20) vorgesehen ist, mit welcher in gleichmässiger Teilung radial von der Umfangsfläche einer Abtriebsscheibe (22) vortretende Abtriebs-Steuerbolzen (24) kämmen, wobei die Abtriebsscheibe (22) auf der rechtwinklig zu und mit Abstand von der Antriebsachse im Getriebegehäuse (12) gelagerten Abtriebswelle (16) angeordnet ist, dadurch gekennzeichnet, dass die zwischen der Abtriebsscheibe (22) und der Abtriebswelle (16) angeordnete Sicherheitskupplung zwei relativ zueinander verschiebliche und je nach Verschiebungsstellung in formschlüssigem Eingriff stehende oder voneinander gelöste Kupplungselemente (Abtriebsscheibe 22; scheibenförmiger Bauteil 26) aufweist, von denen das eine drehfest mit der ihrerseits drehbar auf der Abtriebswelle gelagerten Abtriebsscheibe und das andere drehfest mit der Abtriebswelle (16) gekoppelt ist, dass das eine Ende der Vorspann-Feder (30) derart direkt oder indirekt an dem relativ zum anderen Kupplungselement (22) verschieblichen Kupplungselement (26) abgestützt ist, dass die Kupplungselemente (22; 26) in Eingriff gedrängt sind, und dass das das andere Ende der Feder (30) abstützende Vorspannelement (Zugstange 38) an einem Ende eines verschwenkbar im Getriebegehäuse (12) gelagerten Schwinghebels (46) angeschlossen ist, der mit einem die Steuerfläche (52) der Antriebskurve (54) bzw. des -nockens des Kurven- bzw. Nockentriebes abtastenden Folgeglied (48, 50) gekoppelt ist.

3. Schrittgetriebe nach Anspruch 2, dadurch gekennzeichnet, dass die Abtriebsscheibe (22) und das drehfest mit ihr verbundene Kupplungselement zu einem drehbar, in Längsrichtung jedoch unverschieblich auf der Abtriebswelle (16) gelagerten integralen Bauteil vereinigt sind, und dass das zugeordnete zweite drehfest mit der Abtriebswelle (16) verbundene Kupplungselement (26) in Längsrichtung verschieblich auf der Abtriebswelle (16) angeordnet ist.

4. Schrittgetriebe nach Anspruch 3, dadurch gekennzeichnet, dass der Schwinghebel (46) ein mit seinem einen Ende um einen im Bereich zwischen der Antriebs- und der Abtriebsachse (14; 16) parallel zur Antriebsachse (14) verlaufende Achse (34) verschwenkbar im Getriebegehäuse gelagerter einarmiger Hebel ist, der sich über die an bzw. neben der Globoid- oder Zylinder-Walze (18) vorgesehene und drehfest mit ihr verbundene Antriebskurve (54) oder den -nocken des Kurven- oder Nockentriebes hinweg erstreckt und in einem der Antriebskurve bzw. dem -nocken gegenüberliegenden Bereich mit dem Folgeglied (Ansatz 48; Rolle 50) versehen ist, wobei in sein freies Ende die Vorspannung der Feder (30) in dem Sinne eingeleitet ist, dass das Folgeglied in Anlage an die Steuerfläche (52) der Antriebskurve (54) bzw. des -nockens gedrängt wird, und dass auf der den Schwinghebel (46) im Getriebegehäuse (12) lagernden Achse ein zweiter zweiarmiger Hebel (32) verschwenkbar gelagert ist, dessen einer Hebelarm auf der freien Stirnfläche des drehfest aber längsverschieblich auf der Abtriebswelle (16) gelagerten Kupplungselements (26) abgestützt ist, während in sein anderes Ende die Vorspannung der Feder (30) in dem Sinne eingeleitet ist, dass das auf der Stirnfläche des Kupplungselements (26) abgestützte Hebelarmende das Kupplungselement (26) in Eingriff mit dem zugeordneten zweiten Kupplungselement (22) drängt.

5. Schrittgetriebe nach Anspruch 1 mit einer im Getriebegehäuse auf der Antriebswelle angeordneten Globoid- oder Zylinder-Walze (18), auf bzw. in deren Umfangsfläche eine steg- oder nutförmige Antriebs-Steuerkurve (20) vorgesehen ist, mit welcher in gleichmässiger Teilung radial von der Umfangsfläche einer Abtriebsscheibe (22) vortretende Abtriebs-Steuerbolzen (24) kämmen, wobei die Abtriebsscheibe (22) auf der rechtwinklig zu und mit Abstand von der Antriebsachse im Getriebegehäuse (12) gelagerten Abtriebswelle (16) angeordnet ist, dadurch gekennzeichnet, dass die zwischen der Globoid- oder Zylinder-Walze (18) und der Antriebswelle (14) angeordnete Sicherheitskupplung zwei relativ zueinander verschiebliche und je nach Verschiebungsstellung in formschlüssigem Eingriff stehende oder voneinander gelöste Kupplungselemente aufweist, von denen das eine drehfest mit der Antriebswelle (14) und das andere drehfest mit der ihrerseits drehbar auf der Antriebswelle gelagerten Globoid- oder Zylinder-Walze (18) gekoppelt ist, dass das eine Ende der Vorspannfeder (30) derart direkt oder indirekt an dem relativ zum anderen Kupplungselement verschieblichen Kupplungselement abgestützt ist, dass die Kupplungselemente in Eingriff gedrängt sind, und dass das das andere Ende der Feder (30) abstützende Vorspannelement (Zugstange 38) an einem Ende eines verschwenkbar im Getriebegehäuse (12) gelagerten Schwinghebels (46) angeschlossen ist, der mit einem die Steuerfläche (52) der Antriebskurve (54) bzw. des -nockens abtastenden Folgeglied (48; 50) gekoppelt ist.

6. Schrittgetriebe nach Anspruch 5, dadurch gekennzeichnet, dass die Globoid- oder Zylinder-Walze (18) und das drehfest mit ihr verbundene Kupplungselement zu einem drehbar, in Längsrichtung jedoch unverschieblich auf der Antriebswelle gelagerten integralen Bauteil vereinigt sind, und dass das zugeordnete zweite, drehfest mit der Antriebswelle (14) verbundene Kupplungselement in Längsrichtung verschieblich auf der Abtriebswelle (14) angeordnet ist.

7. Schrittgetriebe nach Anspruch 6, dadurch gekennzeichnet, dass der Schwinghebel (46) ein mit seinem einen Ende um eine im Bereich zwischen der Antriebs- und der Abtriebsachse (14; 16) parallel zur Antriebsachse (14) verschwenkbar im Getriebegehäuse (12) gelagerter einarmiger Hebel ist, der sich über die an bzw. neben der Abtriebsscheibe (22) vorgesehene und drehfest mit ihr verbundene Antriebskurve (54) oder den -nocken des Kurven- oder Nockentriebs hinweggerstreckt und in seiner der Antriebskurve bzw. dem -nocken gegenüberliegenden Bereich mit dem die Antriebskurve bzw. den -nocken abtastenden Folgeglied (48; 50) versehen ist, während in sein freies Ende die Vorspannung der Feder (30) in dem Sinne eingeleitet ist, dass das Folgeglied in Anlage an die Steuerfläche (52) der Antriebskurve (54) bzw. des -nockens gedrängt wird, und dass auf der den Schwinghebel (46) lagernden Achse (34) ein zweiter zweiarmiger Hebel (32) verschwenkbar gelagert ist, dessen einer Hebelarm auf der freien Stirnfläche des drehfest aber längsverschieblich auf der Antriebswelle (14) gelagerten Kupplungselements abgestützt ist, während in sein anderes Ende die Vorspannung der Feder (30) derart eingeleitet ist, dass das auf der Stirnfläche des Kupplungselements abgestützte Hebelarmende das Kupplungselement in Eingriff mit dem zugeordneten zweiten Kupplungselement drängt.

8. Schrittgetriebe nach Anspruch 4 oder 7, dadurch gekennzeichnet, dass am freien Ende des Schwinghebels (46) ein Ende einer längsverschieblich durch eine Bohrung (40) in einem am freien Ende des zugeordneten Hebelarms des zweiarmigen Hebels (32) vorgesehenen Bauteils (Querhaupt 36) hindurchgeführte Zugstange (38) schwenkbar angelenkt ist, und dass die Vorspannfeder (30) eine auf dem durch die Bohrung (40) hindurchgeführten Abschnitt der Zugstange (38) unter Vorspannung angeordnete Druckfeder ist.

9. Schrittgetriebe nach Anspruch 8, dadurch gekennzeichnet, dass die Druckfeder (30) an ihrem dem zugeordneten Hebelarm des zweiarmigen Hebels (32) abgewandten Ende an einer auf ein Gewinde (41) am freien Ende der Zugstange (38) aufgeschraubten Mutter (42) abgestützt ist.

## Claims

1. Mechanical gearbox, in particular a step-by-step gearbox, rotationally driveable via a drive shaft (14), for converting a rotary drive movement into a rotary output movement which follows a predetermined law of motion and can be taken from an output shaft (16), in which gearbox a spring-preloaded safety clutch (22, 26, 30, 32, 46) which is activated during overload is arranged, characterized in that the spring (30) preloading the safety clutch is supported on a preloading element mounted so as to be moveable in the gearbox casing (12) by a predetermined stroke in such a direction as to increase or reduce the spring preloading, and in that the preloading element is part of the output of a cam drive whose drive cam is coupled to the drive or the output shaft (14 or 16) in such a way as to be fixed in terms of rotation.

2. Step-by-step gearbox according to Claim 1, comprising a globoid or cylinder roller (18) which is arranged in the gearbox casing and on or in whose peripheral surface a web-shaped or groove-shaped drive control cam (20) is provided with which output control pins (24) projecting radially at a uniform pitch from the peripheral surface of an output disc (22) mesh, the output disc (22) being arranged on the output shaft (16) mounted at right angles to and at a distance from the drive axis in the gearbox casing (12), characterized in that the safety clutch arranged between the output disc (22) and the output shaft (16) has two clutch elements (output disc 22; disc-shaped component 26) which are displaceable relative to one another and, depending on the displacement position, are in positive-locking engagement or are released from one another and of which one is coupled to the output disc in such a way as to be fixed in terms of rotation, which output disc is in turn rotatably mounted on the output shaft, and the other is coupled to the output shaft (16) in such a way as to be fixed in terms of rotation, in that one end of the preloading spring (30) is supported directly or indirectly on the clutch element (26), displaceable relative to the other clutch element (22), in such a way that the clutch elements (22; 26) are thrust into engagement, and in that the preloading element (tie rod 38), supporting the other end of the spring (30), is connected to one end of a rocking lever (46) which is pivotably mounted in the gearbox casing (12) and is coupled to a follower (48, 50) which follows the contour of the control surface (52) of the drive cam (54) of the cam drive (48, 50).

3. Step-by-step gearbox according to Claim 2, characterized in that the output disc (22) and the clutch element connected to it in such a way as to be fixed in terms of rotation are combined to form an integral component which is mounted on the output shaft (16) in such a way as to be rotatable but non-displaceable in the longitudinal direction, and in that the associated second clutch element (26) connected to the output shaft (16) in such a way as to be fixed in terms of rotation is arranged on the output shaft (16) in such a way as to be displaceable in the longitudinal direction.

4. Step-by-step gearbox according to Claim 3, characterized in that the rocking lever (46) is a single arm lever which, with one of its ends, is pivotably mounted in the gearbox casing about a pivot (34) running parallel to the drive shaft (14) in the area between the drive and the output shaft (14; 16), extends across the drive cam (54) of the cam drive, which drive cam (54) is provided on or next to the globoid or cylinder roller (18) and is connected to it in such a way as to be fixed in terms of rotation, and, in an area located opposite the drive cam, is provided with the follower (extension 48; roller 50), the preloading of the spring (30) being applied to its free end in such a direction that the follower is thrust into contact with the control surface (52) of the drive cam (54), and in that a second double-arm lever (32) is pivotably mounted on the pivot mounting the rocking lever (46) in the gearbox casing (12), one lever arm of which lever (32) is supported on the free end face of the clutch element (26) mounted on the output shaft (16) in such a way as to be fixed in terms of rotation but longitudinally displaceable, while the preloading of the spring (30) is applied to its other end in such a direction that the lever arm end supported on the end face of the clutch element (26) thrusts the clutch element (26) into engagement with the associated second clutch element (22).

5. Step-by-step gearbox according to Claim 1, comprising a globoid or cylinder roller (18) which is arranged in the gearbox casing on the drive shaft and on or in whose peripheral surface a web-shaped or groove-shaped drive control cam (20) is provided with which output control pins (24) projecting radially at a uniform pitch from the peripheral surface of an output disc (22) mesh, the output disc (22) being arranged on the output shaft (16) mounted at right angles to and at a distance from the drive axis in the gearbox casing (12), characterized in that the safety clutch arranged between the globoid or cylinder roller (18) and the drive shaft (14) has two clutch elements which are displaceable relative to one another and, depending on the displacement position, are in positive-looking engagement or are released from one another and of which one is coupled to the drive shaft (14) in such a way as to be fixed in terms of rotation and the other is coupled to the globoid or cylinder roller (18) in such a way as to be fixed in terms of rotation, which globoid or cylinder roller (18) is in turn rotatably mounted on the drive shaft, in that one end of the preloading spring (30) is supported directly or indirectly on the clutch element, displaceable relative to the other clutch element, in such a way that the clutch elements are thrust into engagement, and in that the preloading element (tie rod 38), supporting the other end of the spring (30), is connected to one end of a rocking lever (40) which is pivotably mounted in the gearbox casing (12) and is coupled to a follower (48; 50) which follows the contour of the control surface (52) of the drive cam (54).

6. Step-by-step gearbox according to Claim 5, characterized in that the globoid or cylinder roller (18) and the clutch element connected to it in such a way as to be fixed in terms of rotation are combined to form an integral component which is mounted on the drive shaft in such a way as to be rotatable but non-displaceable in the longitudinal direction, and in that the associated second clutch element connected to the drive shaft (14) in such a way as to be fixed in terms of rotation is arranged on the output shaft (14) in such a way as to be displaceable in the longitudinal direction.

7. Step-by-step gearbox according to Claim 6, characterized in that the rocking lever (46) is a single-arm lever which, with one of its ends, is pivotably mounted in the gearbox casing (12) about a [lacuna] parallel to the drive shaft (14) in the area between the drive and the output shaft (14; 16), extends across the drive cam (54) of the cam drive, which drive cam (54) is provided on or next to the output disc (22) and is connected to it in such a way as to be fixed in terms of rotation, and in its area located opposite the drive cam, is provided with the follower (48; 50) following the contour of the drive cam, while the preloading of the spring (30) is applied to its free end in such a direction that the follower is thrust into contact with the control surface (52) of the drive cam (54), and in that a second double-arm lever (32) is pivotably mounted on the pivot (34) mounting the rocking lever (46), one lever arm of which lever (32) is supported on the free end face of the clutch element (26) mounted on the drive shaft (14) in such a way as to be fixed in terms of rotation but longitudinally displaceable, while the preloading of the spring (30) is applied to its other end in such a way that the lever arm end supported on the end face of the clutch element is thrust into engagement with the associated second coupling element.

8. Step-by-step gearbox according to Claim 4 or 7, characterized in that one end of a tie rod (38) guided in a longitudinally displaceable manner through a bore (40) in a component (crosspiece 36) provided at the free end of the associated lever arm of the double-arm lever (32) is pivotably linked to the free end of the rocking lever (46), and in that the preloading spring (30) is a compression spring arranged under preloading on the section of the tie rod (38) guided through the bore (40).

9. Step-by-step gearbox according to Claim 8, characterized in that the compression spring (30) at its end remote from the associated lever arm of the double-arm lever (32), is supported on a nut (42) screwed onto a thread (41) on the free end of the tie rod (38).

**Revendications**

1. Boîte de transmission mécanique, notamment une boîte de transmission pas-à-pas pouvant être entraînée en rotation par un arbre d'entrée (14) et servant à transformer un mouvement de rotation d'entrée en un mouvement de rotation de sortie qui suit une loi de mouvement fixée à l'avance et peut être prélevé sur un arbre de sortie (16), boîte de transmission dans laquelle est disposé un accouplement de sécurité (22, 26, 30, 32, 46) faisant l'objet d'une précontrainte élastique et se déclenchant en cas de surcharge, caractérisée en ce que le ressort (30) fournissant la précontrainte de l'accouplement de sécurité prend appui sur un élément de précontrainte qui est monté mobile dans le boîtier (12) de la boîte de transmission, sur une course fixée à l'avance et dans le sens d'un accroissement ou d'une réduction de la précontrainte du ressort, et en ce que l'élément de précontrainte fait partie du mécanisme de sortie d'une commande par came, à surface courbe ou saillie, dont la surface courbe ou la saillie de commande est accouplée à l'arbre d'entrée ou de sortie (14 ou 16) de façon à en être solidaire en rotation.

2. Boîte de transmission pas-à-pas suivant la revendication 1, comportant un tambour globique ou cylindrique (18), qui est disposé dans le boîtier de la boîte de transmission, sur l'arbre d'entrée, et sur ou dans la surface périphérique duquel est prévue une surface courbe de commande (20), en forme de nervure ou de gorge, avec laquelle viennent en prise des galets de commande de sortie (24) qui font saillie radialement, suivant une répartition uniforme, par rapport à la surface périphérique d'un disque de sortie (22), ce disque de sortie (22) étant disposé sur l'arbre de sortie (16) qui est monté dans le boîtier (12) de la boîte de transmission, perpendiculairement à l'arbre d'entrée et à une certaine distance de celui-ci, caractérisée en ce que l'accouplement de sécurité disposé entre le disque de sortie (22) et l'arbre de sortie (16) comprend deux éléments d'accouplement (disque de sortie 22, pièce en forme de disque 26) qui sont mobiles en translation l'un par rapport à l'autre et soit se trouvent en prise par complémentarité de formes, soit sont séparés l'un de l'autre, suivant leur disposition relative en translation, et qui sont accouplés, de façon à en être solidaires en rotation, l'un au disque de sortie, lui-même monté rotatif sur l'arbre de sortie et l'autre à l'arbre de sortie (16), en ce qu'une extrémité du ressort de précontrainte (30) prend appui, directement ou indirectement, sur l'élément d'accouplement (26) mobile en translation relative par rapport à l'autre élément d'accouplement (22), d'une façon telle que ces éléments d'accouplement (22, 26) sont appliqués en prise, et en ce que l'élément de précontrainte (tige de serrage 38) servant d'appui à l'autre extrémité du ressort (30) est relié à une extrémité d'un levier (46), monté basculant dans le boîtier (12) de la boîte de transmission, qui est accouplé à un suiveur de came (48, 50) qui suit la surface de commande (52) de la came à surface courbe ou saillie de la commande par came.

3. Boîte de transmission pas-à-pas suivant la revendication 2, caractérisée en ce que le disque de sortie (22) et l'élément d'accouplement qui lui est relié de façon à en être solidaire en rotation sont réunis sous la forme d'un élément en une seule pièce monté rotatif, mais fixe en translation dans le sens longitudinal, sur l'arbre de sortie (16), et en ce que le second élément d'accouplement (26), associé au premier et relié à l'arbre de sortie (16) de façon à en être solidaire en rotation est monté mobile en translation suivant la direction longitudinale sur cet arbre de sortie (16).

4. Boîte de transmission pas-à-pas suivant la revendication 3, caractérisée en ce que le levier basculant (46) est un levier, à un seul bras, qui est monté dans le boîtier (12) de la boîte de transmission de façon à pouvoir basculer par l'une de ses extrémités sur un axe (34) s'étendant parallèlement à l'arbre d'entrée (14), dans la zone située entre les arbres d'entrée et de sortie (14, 16), tandis que ce levier, d'une part, s'étend au-dessus de la surface courbe (54) ou saillie de la commande à came ou saillie qui est prévue sur le tambour globique ou cylindrique (18) ou à côté de celui-ci et lui est reliée de façon à en être solidaire en rotation et que, d'autre part, dans une zone opposée à la surface courbe ou saillie de commande, il est pourvu du suiveur de came (talon 48, galet 50) qui suit cette surface courbe ou saillie de commande, la précontrainte du ressort (30) étant prévue, à son extrémité libre, telle que le suiveur de came soit appliqué en appui sur la surface de commande (52) de la surface courbe (54) ou saillie de commande, et en ce qu'il est prévu, monté basculant sur l'axe sur lequel le levier basculant (46) est monté dans le boîtier (12) de la boîte de transmission, un second levier (32), à deux bras, dont l'un des bras de levier prend appui sur la surface frontale libre de l'élément d'accouplement (26) monté sur l'arbre de sortie (16) de façon à en être solidaire en rotation, mais en étant mobile en translation sur lui, tandis que, à son autre extrémité, cette précontrainte du ressort (30) est prévue telle que l'extrémité du bras de levier qui prend appui sur la surface frontale de l'élément d'accouplement (26) applique cet élément d'accouplement (26) en prise avec le second élément d'accouplement (22), qui lui est associé.

5. Boîte de transmission pas-à-pas suivant la revendication 1, comportant un tambour globique ou cylindrique (18), qui est disposé dans le boîtier de la boîte de transmission, sur l'arbre d'entrée, et sur ou dans la surface périphérique duquel est prévue une surface courbe de commande (20), en forme de nervure ou de gorge, avec laquelle viennent en prise des galets de commande de sortie (24) qui font saillie radialement, suivant une répartition uniforme, par rapport à la surface périphérique d'un disque de sortie (22), ce disque de sortie (22) étant disposé sur l'arbre de sortie (16) qui est monté dans le boîtier (12) de la boîte de transmission, perpendiculairement à l'arbre d'entrée et à une certaine distance de celui-ci, caractérisée en ce que l'accouplement de sécurité disposé entre le tambour globique ou cylindrique (18) et l'arbre d'entrée (14) comprend deux éléments d'accouplement qui sont mobiles en translation l'un par rapport à l'autre et soit se trouvent en prise par complémentarité de formes, soit sont séparés l'un de l'autre, suivant leur disposition relative en translation, et qui sont accouplés, de façon à en être solidaires en rotation, l'un à l'arbre d'entrée (14) et l'autre au tambour globique ou cylindrique (18), lui-même monté rotatif sur l'arbre d'entrée, en ce que l'une des extrémités du ressort de précontrainte (30) prend appui, directement ou indirectement, sur l'élément d'accouplement mobile en translation relative par rapport à l'autre élément d'accouplement, d'une façon telle que ces éléments d'accouplement sont appliqués en prise, et en ce que l'élément de précontrainte (tige de serrage 38) servant d'appui à l'autre extrémité du ressort (30) est relié à une extrémité d'un levier (46), monté basculant dans le boîtier (12) de la boîte de transmission, qui est accouplé à un suiveur de came (48, 50) qui suit la surface de commande (52) de la came à surface courbe ou saillie de la commande par came.

6. Boîte de transmission pas-à-pas suivant la revendication 5, caractérisée en ce que le tambour globique ou cylindrique (18) et l'élément d'accouplement qui lui est relié de façon à en être solidaire en rotation sont réunis sous la forme d'un élément en une seule pièce qui est monté rotatif, mais fixe en translation dans le sens longitudinal, sur l'arbre d'entrée, et en ce que le second élément d'accouplement, associé au premier et relié à l'arbre d'entrée (14) de façon à en être solidaire en rotation est alors monté mobile en translation suivant la direction longitudinale sur cet arbre d'entrée (14).

7. Boîte de transmission pas-à-pas suivant la revendication 3, caractérisée en ce que le levier basculant (46) est un levier, à un seul bras, qui est monté dans le boîtier (12) de la boîte de transmission de façon à pouvoir basculer par l'une de ses extrémités sur un axe (34) s'étendant parallèlement à l'arbre d'entrée (14), dans la zone située entre les arbres d'entrée et de sortie (14, 16), tandis que ce levier, d'une part, s'étend au-dessus de la surface courbe (54) ou saillie de la commande à came ou saillie qui est prévue sur le disque de sortie (22) ou à côté de celui-ci et lui est reliée de façon à en être solidaire en rotation et que, d'autre part, dans une zone opposée à la surface courbe ou saillie de commande, il est pourvu du suiveur de came (48, 50) qui suit cette surface courbe ou saillie de commande, la précontrainte du ressort (30) étant prévue, à son extrémité libre, telle que le suiveur de came soit appliqué en appui sur la surface de commande (52) de la came à courbe (54) ou saillie de commande, et en ce qu'il est prévu, monté basculant sur l'axe (34) sur lequel le levier basculant (46) est monté, un second levier (32), à deux bras, dont l'un des bras de levier prend appui sur la surface frontale libre de l'élément d'accouplement monté sur l'arbre d'entrée (14) de façon à en être solidaire en rotation, mais en étant mobile en translation sur lui, tandis que, à son autre extrémité, cette précontrainte du ressort (30) est prévue telle que l'extrémité du bras de levier qui prend appui sur la surface frontale de l'élément d'accouplement applique cet élément d'accouplement en prise avec le second élément d'accouplement, qui lui est associé.

8. Boîte de transmission pas-à-pas suivant la revendication 4 ou 7, caractérisée en ce qu'une extrémité d'une tige de serrage (38) traversant, d'une manière mobile en translation longitudinale, un perçage (40) ménagé dans une pièce (traverse 36), prévue à l'extrémité libre du bras associé du levier à deux bras (32), et en ce que le ressort de précontrainte (30) est un ressort de compression monté, sous précontrainte, sur le tronçon de la tige de serrage (38) qui traverse le perçage (40).

9. Boîte de transmission pas-à-pas suivant la revendication 8, caractérisée en ce qu'à son extrémité située à l'opposé du bras, qui lui est associé, du levier à deux bras (32), le ressort de compression (30) prenne appui sur un écrou (42) qui se visse sur un filetage (41) prévu à l'extrémité libre de la tige de serrage (38).

FIG.1

FIG. 2

13

FIG.3